# EUROPEAN PATENT SPECIFICATION

(11) **EP 2 548 344 B1**
(45) Date of publication and mention of the grant of the patent: **29.08.2018**
(21) Application number: 11756924.4
(22) Date of filing: 16.03.2011
(51) Int. Cl.: H04W 36/08, H04L 12/24, H04W 28/16, H04L 12/26, H04W 24/02, H04W 48/02

(54) **DETERMINING ESSENTIAL RESOURCES IN A WIRELESS NETWORK**
BESTIMMUNG ESSENTIELLER RESSOURCEN IN EINEM DRAHTLOSEN NETZWERK
DÉTERMINATION DE RESSOURCES ESSENTIELLES DANS UN RÉSEAU SANS FIL

(30) Priority: 16.03.2010 US 314252 P
(43) Date of publication of application: 23.01.2013
(73) Proprietor: Optimi Corporation, Atlanta, GA 30309 (US)
(72) Inventor: MORENO, Salvador, Pedraza, 29010 Malaga (ES); MORENO, Juan, Ramiro, 29014 Malaga (ES)
(74) Representative: Stasiewski, Piotr Grzegorz
(86) International application number: PCT/US2011/028652
(87) International publication number: WO 2011/116083

(56) References cited:
- US-A1- 2005 073 962
- US-A1- 2005 256 694
- US-A1- 2008 221 858
- HUAWEI: "Overview to LTE energy saving solutions to cell switch off/on", 3GPP DRAFT; R3-100162, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Valencia, Spain; 20100118, 15 January 2010 (2010-01-15), XP050424028, [retrieved on 2010-01-15]
- ALCATEL-LUCENT: "Capacity and Coverage SON Use case", 3GPP DRAFT; R3-080082_SONCAPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163314, [retrieved on 2008-02-05]

## Description

### CROSS REFERENCE TO RELATED APPLICATION

This application claims priority to U.S. Provisional Patent Application Serial Number 61/314,252, entitled "Determining Essential Resources for Energy Management in a Wireless Network," filed March 16, 2010.

### TECHNICAL FIELD

The present disclosure relates generally to wireless networks. More particularly, the present disclosure relates to determining essential resources in a wireless network.

### BACKGROUND

A goal of mobile and wireless communication system operators is to provide adequate service to customers at a minimum cost. Operating costs of networking equipment can constitute a substantial portion of operating costs associated with a network. The operating costs can include maintenance costs, hardware and software updates for the equipment, and power, bandwidth, and other network resource consumption associated with the equipment.

Because equipment is rarely added to a network without sufficient demand to justify the capital expenditure, network operators often are restricted from considering eliminating equipment totally from the network. Thus, network operators may consider various approaches to reduce costs associated with operating the equipment such as upgrading the equipment to more reliable and/or energy efficient equipment, and/or deactivating the equipment at certain times.

Costs associated with the equipment may be managed by temporarily deactivating the equipment. Determining what network resources may be temporarily deactivated requires extensive data analysis. Furthermore, the risks associated with temporarily deactivating the equipment can be substantial, so the analysis must be correct to avoid negatively affecting network operations.
Document R3-100162 from 3GPP TSG-RAN WG3#66bis meeting, (Valencia, Spain, January 18 - 22, 2010) discloses an overview about LTE energy saving solutions to cell switch on/off.

It is with respect to these and other considerations that the disclosure made herein is presented.

### SUMMARY

Concepts and technologies are described herein for determining if network resources in a wireless network are essential or non-essential. In accordance with the concepts and technologies disclosed herein, network resources associated with a wireless networking environment can be identified as being essential network resources or non-essential network resources. Network resources identified as being non-essential may be switched to a low-power or off state to conserve energy during periods of reduced usage. A network resource determined to be essential, may be determined not to be a candidate for being switched to a low power or off state.

According to one embodiment, a method for identifying if a network resource in a wireless networking environment is needed includes identifying, at a central controller, a network resource to be tested. A time period during which the network resource is to be tested is defined. The method also includes generating a command for transitioning the network resource to a softbar operation state. In the softbar state, use of the network resource is avoided. The method also includes determining if the time period has expired, and in response to determining that the time period has expired, obtaining access data describing activity associated with the network resource during the time period, and identifying the network resource as a needed network resource in response to determining that the access data indicates usage of the network resource during the time period.

The softbar operation state comprises a state in which use of the network resource is allowed when a failure to use the network resource is expected to result in a reduction in quality of service of communications, or a premature or unintended termination of a voice or data communication, or an injury or death in a case of an emergency, or a failure to provide services or communications.

In some embodiments, the method further includes generating a command for transitioning the network resource out of a softbar operation state, in response to determining that the time period has expired. The method also can include identifying the network resource as a non-essential network resource in response to determining that the access data does not indicate substantial usage of the network resource during the time period. The method further can include maintaining the network resource in the softbar operation state, in response to determining that the time period has not expired.

In some embodiments, the network resource includes a base station of the wireless networking environment, and determining that the access data does not indicate usage of the network resource during the time period includes determining that the time period has expired without an attempted handover of a communication to the base station. The method also can include receiving the access data from the base station, the access data including data indicating activity associated with the base station during the time period. The method further can include receiving access data including data indicating activity associated with the network resource during the time period.

According to another embodiment, a central controller is configured to identify if a network resource is needed. The central controller includes a central processing unit in communication with a mass storage device. Execution of computer-executable instructions stored in the mass storage device cause the central processing unit to identify a network resource to be tested, to define a time period during which the network resource is to be tested, and to generate a command for transitioning the network resource to a softbar operation state. In the softbar operation state, use of the network resource is avoided. Execution of the computer-executable instructions can further cause the central processing unit to determine if the time period has expired and, in response to determining that the time period has expired, obtain access data describing activity associated with the network resource during the time period, and identify the network resource as a needed network resource in response to determining that the access data indicates usage of the network resource during the time period.

The softbar operation state comprises a state in which use of the network resource is allowed when a failure to use the network resource is expected to result in a reduction in quality of service of communications, or a premature or unintended termination of a voice or data communication, or an injury or death in a case of an emergency, or a failure to provide services or communications.

In some embodiments, execution of the computer-executable instructions stored in the mass storage device further cause the central processing unit to generate a command for transitioning the network resource out of a softbar operation state, in response to determining that the time period has expired. Execution of the computer-executable instructions stored in the mass storage device also can cause the central processing unit to identify the network resource from two or more network resources, and the two or more network resources provide services to a geographic area.

In some embodiments, the two or more network resources include two or more base stations, each of the two or more base stations has a respective coverage area, and at least two of the coverage areas of the base stations overlap, at least partially. Usage of the network resource can include a handover of a call from one of the two or more base stations to a second of the two or more base stations, and the call can be associated with a mobile station located within at least one of the two or more coverage areas. Usage of the network resource can include access of the base station as a last resort during the time period.

According to another embodiment, the central controller is configured to identify a base station as the needed network resource.

It should be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

The object of the invention is achieved by the subject-matter of the independent claims. Advantageous embodiments are defined in the dependent claims. Further examples are provided for facilitating the understanding of the invention.

### BRIEF DESCRIPTION OF THE DRAWINGS

FIGURE **1** is a block diagram illustrating a wireless networking environment according to one or more embodiments presented herein;
FIGURE **2** is a line diagram illustrating additional aspects of the concepts and technologies disclosed herein;
FIGURE **3** is a logical flow diagram illustrating a process for determining essential resources in a wireless network, according to some embodiments presented herein;
FIGURE **4** is a logical flow diagram illustrating another process for determining essential resources in a wireless network, according to some embodiments presented herein;
FIGURE **5** is a logical flow diagram illustrating yet another process for determining essential resources in a wireless network, according to some embodiments presented herein; and
FIGURE **6** is a computer architecture diagram illustrating computing system hardware capable of determining essential resources in a wireless network, according to some embodiments presented herein.

### DETAILED DESCRIPTION

The following description is directed to concepts and technologies for determining essential resources in a wireless network ("network resources"). According to some implementations of the concepts and technologies disclosed herein, network resources associated with a wireless network may be identified as being "essential" or "non-essential." The word essential, as used herein, does not mean "necessary," "indispensable," and/or other terms implying the same meaning. As used herein, an essential network resource is a network resource that may be useful or helpful to a wireless network operator for the purposes of maintaining quality of service (QoS) of communications, preventing premature and/or unintended termination of voice and/or data communications, providing user services that are expected or needed at a particular time, and/or for other purposes. Thus, an essential network resource may not be necessary to maintaining service in a network, but may be helpful, useful, or needed to maintain an acceptable service level or to provide certain services or communications in the network.

Similarly, a network resource may be identified as being non-essential to a network if the network resource is not be helpful, useful, or needed at a particular time to maintain service in the network, to maintain an acceptable service level, and/or to provide certain services or communications in the network at a particular time. Thus, a non-essential network resource is network resource that is not useful or needed at a particular time to maintain QoS of communications, to prevent premature or unintended termination of voice and/or data communications, to provide services, and/or other purposes.

According to some embodiments of the concepts and technologies disclosed herein, network resources that are identified as being non-essential can be switched into operation states in which usage of various network, bandwidth, power, maintenance, and/or other resources are reduced, minimized, and/or eliminated. For example, a non-essential network resource may be operated in a low-power or off state to help conserve energy or other resources. In some embodiments, a particular network resource may be determined to be non-essential during one or more time periods of anticipated reduced network resource usage, and thus can be switched to the operation states mentioned above for reducing network, bandwidth, power, maintenance, and/or other resources.

According to various implementations, a central controller is configured to test network resources to determine if the network resources are essential or non-essential. The central controller may test the network resources using a "softbar state." As will be explained in more detail herein, when a network resource operates in a "softbar" state, of the network resource is avoided and/or restricted unless usage of the network resource is attempted as a last resort, or in a last resort condition. A last resort condition is a situation in which failure to use the network resource operating in the softbar state is expected to result in an adverse occurrence such as, for example, a reduction in QoS, a "dropped call" or other form of premature or unintended termination of a voice or data communication, injury or death in a case of an emergency, a failure to provide services or communications, and the like. Thus, according to various embodiments disclosed herein, a network resource operating in a softbar state may be forced into use if a last resort condition is detected by the central controller or the network resource operating in the softbar state.

Thus, the softbar state can be readily distinguished from a bar or barred operation state. A network resource operating in a barred state can be restricted from providing any services, even in last resort conditions. While operating network resources in a barred state can be useful in testing network operations, such testing can have adverse consequences on communication quality and/or an ability to provide services or communications for customers. Thus, various embodiments of the concepts and technologies disclosed herein make use of a softbar state to test network resources without risking the adverse consequences described herein.

In accordance with implementations of the concepts and technologies disclosed herein, network resources are operated in a softbar state during a test period. The test period can be defined by a network operator or other authorized entity, testing software, historical usage information associated with the tested network resource, and/or other considerations. After the test period ends, or during the test period if desired, network usage information and/or other access data can be obtained or received. The access data can be analyzed or reviewed to determine if the network resource being tested in the softbar state was used or accessed during the test period. In some embodiments, any usage of the network resource is considered, and in other embodiments, substantial usage of the network resource is considered, wherein substantial usage that lasts a particular amount of time or uses a particular percentage or threshold amount of network resource capacity. The amount of time and/or percentage or threshold amount can be set by preferences, based upon current operating information, and/or other considerations. If the network resource was used during the test period, and if such usage is substantial, the data suggests that the network resource was needed in a last resort condition during the test period. As such, the network resource may be treated, tagged, or labeled as an essential network resource.

Similarly, if the network resource was not used during the test period, or was used but not in a substantial manner, the data can suggest that the network resource was not needed in a last resort condition during the test period. As such, the network resource may be treated, tagged, or labeled as a non-essential network resource. As mentioned above network resources that are identified as being non-essential may be commanded to switch to a low-power or off state to conserve energy, and/or otherwise modify their operation to conserve power, bandwidth, and/or network resources. These and other aspects of the concepts and technologies disclosed herein will be discussed in more detail below.

While the subject matter described herein is presented in the general context of program modules that execute in conjunction with the execution of an operating system and application programs on a computer system or embedded processor system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including hand-held devices, multiprocessor systems, microprocessor-based or programmable consumer electronics, minicomputers, mainframe computers, and the like.

In the following detailed description, references are made to the accompanying drawings that form a part hereof, and which are shown by way of illustration specific embodiments or examples. Referring now to the drawings, in which like numerals represent like elements through the several figures, aspects of computing systems and methodologies for determining essential resources in a wireless network are described.

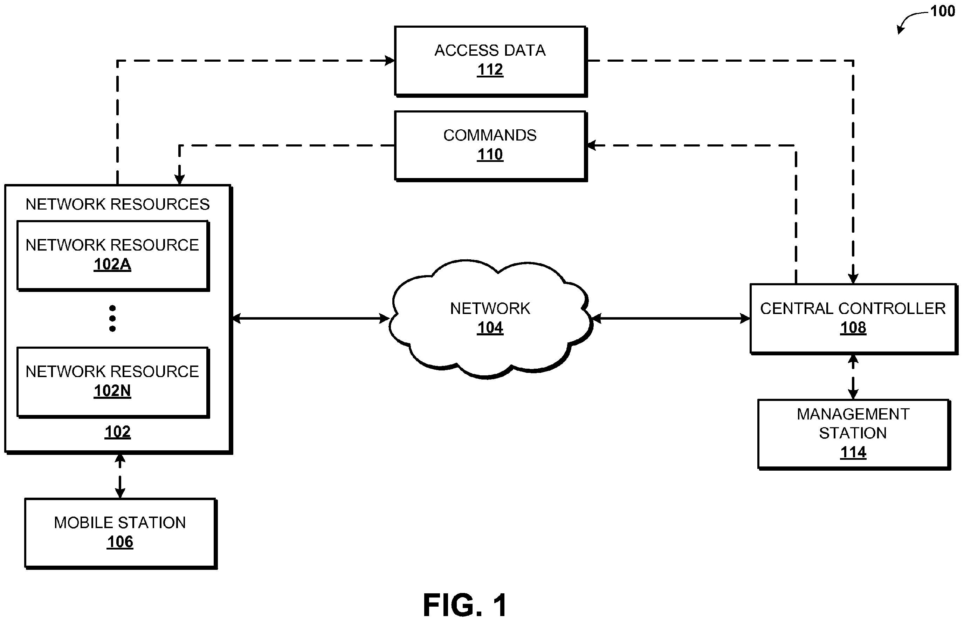

Turning now to FIGURE **1****,** a block diagram illustrating a wireless networking environment **100** is provided, according to various embodiments of the concepts and technologies presented herein. In the illustrated embodiment, the wireless networking environment **100** includes one or more network resources **102A-102N,** hereinafter referred to collectively as "network resources **102"** or generically as a "network resource **102."** The network resources **102** are configured to communicate with various networks, systems, and/or components within or via a network **104.** The network **104** can include any combination of wireless and wired networks, including packet-based and/or circuit switched networks.

The network resources **102** include computing, hardware, software, networking, and/or other resources used to provide services to one or more users, network nodes, devices, and/or other systems or networks within or in communication with the wireless networking environment **100.** For example, the network resources **102** can include cellular communications equipment for communicating with a mobile station **106** operating on or in communication with the wireless networking environment **100.** According to various implementations, the network resources **102** include various network components. For example, the network resources **102** can include, but are not limited to, antennas, antenna components, radios, receivers, transceivers, GPRS core network components, location service nodes, an Internet Protocol Multimedia Subsystem (IMS), other systems and/or components, and the like. The network resources **102** also can include base transceiver stations (BTSs), Node-Bs or e-Node-Bs, base station controllers (BSCs), mobile management entities (MMEs), radio network controllers (RNCs), mobile switching centers (MSCs), multimedia messaging service centers (MMSCs), short message service centers (SMSCs), home location registers (HLRs), home subscriber servers (HSSs), visitor location registers (VLRs), charging and/or billing platforms, voicemail platforms, combinations thereof, and the like. The network resources **102** also can include other network components, systems, and/or other resources, and therefore should not be construed as being limited to cellular communication hardware and/or software.

According to various implementations, the mobile station **106** includes, but is not limited to, a wireless cellular telephone, a smart phone, a laptop computer, a tablet computer, a desktop computer, a set-top box (STB), a personal data assistant (PDA), a global positioning system (GPS) receiver, an automobile communication system, combinations thereof, and the like. For purposes of simplifying description of the concepts and technologies disclosed herein, the mobile station **106** is described herein as a cellular communications device such as a feature phone or a smart phone. It should be understood that this embodiment is illustrative, and should not be construed as being limiting in any way.

The network resources **102** can communicate with and/or be monitored or controlled by a central controller **108** operating on or in communication with the network **104.** The central controller **108** is configured to execute an operating system and one or more application programs for providing the functionality described herein for determining essential resources in a wireless network. The operating system is a computer program for controlling the operation of the central controller **108.** Examples of operating systems include, but are not limited to, a member of the MAC OS, iOS, and/or LEOPARD OS families of operating systems from the Apple Corporation in Cupertino, California, a member of the WINDOWS, WINDOWS MOBILE, and/or WINDOWS SERVER families of operating systems from Microsoft Corporation in Redmond, Washington, a member of the LINUX family of operating systems, a member of the SYMBIAN family of operating systems, a member of the BREW family of operating systems from Qualcomm Corporation in San Diego, California, a member of the FREEBSD family of operating systems, combinations thereof, and the like.

The application programs executed by the central controller **108** can include one or more executable programs that are configured for execution on top of the operating system to provide the functionality described herein for determining essential resources in a wireless network. While the central controller **108** is described herein as executing the application programs to provide the functionality described herein, it should be understood that this embodiment is illustrative. More particularly, in some embodiments, the application programs are embodied in or as one or more hardware devices separate from the central controller **108.** Thus, the illustrated embodiment should be understood as being illustrative of one contemplated embodiment, and should not be construed as being limiting in any way.

The central controller **108** is configured to test one or more of the network resources **102** to determine which, if any, of the network resources **102** are essential or non-essential. More particularly, the central controller **108** determines network resources **102** to test, determines time periods for the testing, issues one or more commands **110** to the network resources **102** for executing the tests, and receives access data **112** from the network resources **102** or a monitoring or reporting platform, analyzes or reviews the access data **112,** and determines if access of the network resources **102** occurred during the test period. As mentioned above, only substantial uses of the network resources **102** may be considered in some embodiments. Thus, for example, pings, operation information reporting, status indicators, and/or other non-substantial usage of the network resources **102** may be ignored, in some embodiments.

The commands **110** are interpretable by the network resources **102** to change an operating state of the network resources to a softbar state, as described herein. The commands **110** also can specify a time period defined for operation in the softbar state and, therefore, the time period during which the testing will last. In response to receiving the commands **110,** the network resources **102** can switch an operating state of the network resources **102** to a softbar state for testing whether the network resource **102** is essential or non-essential.

According to various embodiments, the time period for testing the network resources **102** is defined by the central controller **108** or other sources. In some embodiments, for example, a user interfaces with the central controller **108** via a management station **114.** The user can define one or more time periods via the management station **114,** if desired. Similarly, the central controller **108** can define the time periods based on network usage models, monitored traffic information, set preferences and/or configuration files, combinations thereof, and the like.

The time period can be as long or as short as desired, depending upon needs or preferences associated with the testing. For example, the central controller **108** can define a relatively short time period such as a number of seconds, minutes, and/or hours for testing if the network resource is essential or non-essential. Similarly, the central controller **108** can define a relatively long time period such as one or more hours or days for testing if the network resource **102** is essential or non-essential. In one non-limiting example, a particular network resource **102** may be tested over a weekend or a holiday to determine if the network resource **102** is essential over the weekend or the holiday. Similarly, the network resources **102** may be tested over a number of seconds, minutes, or hours to determine if the network resource is essential or non-essential during the number of seconds, minutes, or hours. It should be understood that these embodiments are illustrative, and should not be construed as being limiting in any way.

The central controller **108** generates and transmits the commands **110** to the network resources **102.** The network resources **102** enter the softbar state in response to the commands **110** and monitor access attempts during the defined test periods. In some embodiments, the network resources **102** self-report the access data **112** to the central controller **108,** and in some embodiments, the network resources **102** are monitored by external systems, hardware, or software (not shown in FIGURE **1**) for the access data **112.** The access data **112** can define how the network resources **102** are accessed and/or how access to the network resources **102** is requested or attempted when the network resources **102** are or were operating in the softbar state. The network resources **102** also can be configured to execute a test application (not shown) for self-reporting the access data **112** to the central controller **108,** if desired.

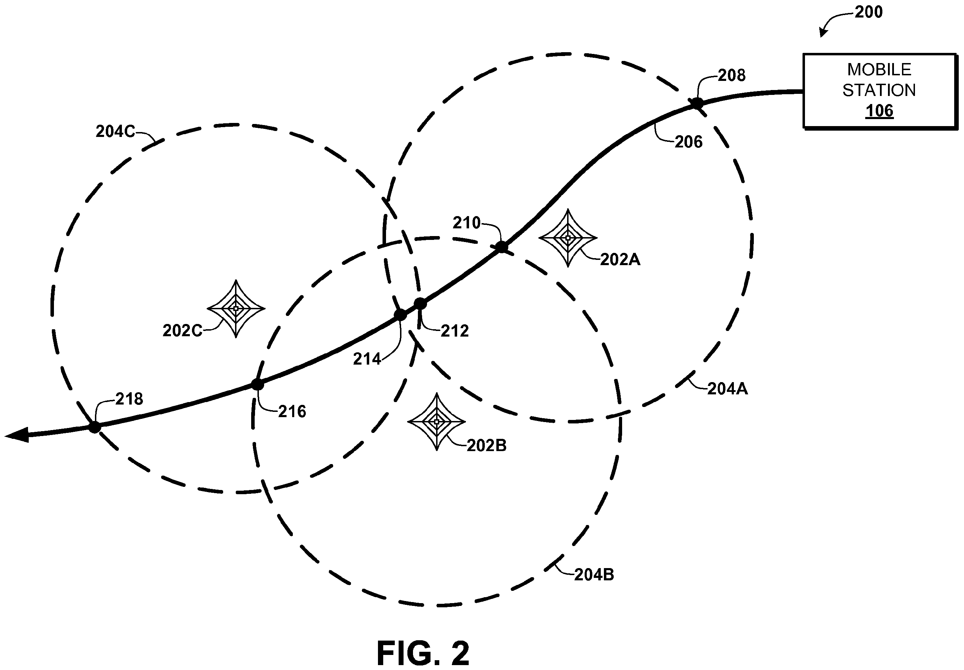

The access data **112** identifies access requests associated with the network resources **102** and/or access of the network resources **102.** The access data **112** can identify a number of times the network resource **102** was accessed or access is attempted during the test period, and what types of access have occurred or been attempted. Because the network resource **102** is tested by switching the network resource **102** into a softbar operation state, the access data **112** indicates, by indicating traffic and/or usage associated with the network resource **102,** if the access or access attempts detected during the test occurred during a last resort condition as defined herein. In other words, the access data **112** indicates, by virtue of indicating usage of the network resource **102** during operation in a softbar operation state, that the access or access attempts occurred during a last resort condition. As mentioned above, the usage of the network resource **102** may be ignored if the usage is not substantial. In some embodiments, substantial usage is any usage used to service customer requests or communications, and non-substantial usage is any usage relating to network operations and/or non-value-added services. This embodiment is exemplary, as usage satisfying threshold percentages, amounts, times, and the like, also can be considered as being substantial. Thus, based upon the access data **112,** the central controller **108** can identify the tested network resources **102** as being essential or non-essential. These and other aspects of the concepts and technologies disclosed herein are described in additional detail with reference to FIGURES **2-5** below.

FIGURE **1** illustrates multiple network resources **102,** one mobile station **106,** and one central controller **108.** It should be understood, however, that some implementations of the wireless networking environment **100** include one or more network resources **102,** multiple mobile stations **106,** and/or multiple central controllers **108.** Therefore, the illustrated embodiment should be understood as being illustrative, and should not be construed as being limiting in any way.

Turning now to FIGURE **2****,** additional aspects of the concepts and technologies disclosed herein for determining essential resources in a wireless network are described in detail. In particular, FIGURE **2** illustrates a line diagram showing an example scenario in which the concepts and technologies disclosed herein may be implemented. It should be understood that the embodiment illustrated in FIGURE **2** is illustrative of only one contemplated scenario and should not be construed as being limiting in any way.

In FIGURE **2****,** three base stations **202A-C** (hereinafter collectively referred to as "base stations **202**") are illustrated. The base stations **202** can include one or more antennas, antenna positioning systems, radio frequency components, amplifiers, transceivers, relay modules, power supplies, and various other subsystems and components associated with mobile communication base station systems. Thus, the base stations **202** can be or can include one or more of the network resources **102** described above with reference to FIGURE **1****.**

Three coverage areas **204A-C** (hereinafter collectively referred to as "coverage areas **204**") are illustrated in FIGURE **2****.** The coverage areas **204A-C** correspond, respectively, to coverage areas of the base stations **202A-C.** In particular, the coverage area **204A** is associated with the base station **202A,** the coverage area **204B** is associated with the base station **202B,** and the coverage area **204C** is associated with the base station **202C.** As shown in FIGURE **2****,** the coverage areas **204** may or may not overlap partially and/or completely. It should be understood that the illustrated base stations **202,** coverage areas **204,** and their respective overlaps are illustrative, and should not be construed as being limiting in any way.

In the scenario illustrated in FIGURE **2****,** the mobile station **106** moves through or adjacent to the coverage areas **204** along a path **206.** According to one example, the path **206** corresponds to a road, highway, waterway, walkway, or other path along which the mobile station **106** travels. For purposes of illustrating the concepts and technologies disclosed herein, the path **206** can be considered as corresponding to a highway upon which a user in possession of the mobile station **106** travels. It should be understood that this embodiment is illustrative, and should not be construed as being limiting in any way. As the mobile station **106** moves along the path **206,** the mobile station **106** can pass into and out of the coverage areas **204.** Furthermore, as the mobile station **106** moves along the path **206,** the mobile station may be within more than one coverage area **204** at a particular time.

More particularly, as the mobile station **106** moves along the path **206,** the mobile station **106** enters the coverage area **204A** at a first point **208.** At a second point **210,** the mobile station **106** enters the coverage area **204B.** It can be appreciated from FIGURE **2** that the mobile station can simultaneously be within the coverage area **204A** and the coverage area **204B** after encountering the second point **210** while moving along the path **206.** The mobile station **106** will remain within the coverage areas **204A, 204B** until the mobile station **106** encounters the third point **212.**

Upon encountering the third point **212,** the mobile station **106** can be within all three coverage areas **204.** The mobile station **106** remains within all three coverage areas **204** until the mobile station **106** encounters a fourth point **214,** at which the mobile station **106** leaves the coverage area **204A.** Upon encountering a fifth point **216,** the mobile station **106** exits the coverage area **204B,** after which the mobile station **106** is only within the coverage area **204C.** The mobile station **106** exits the coverage area **204C** at the sixth point **218.** Although not illustrated in FIGURE **2****,** it should be understood that additional and/or alternative coverage areas **204** may exist adjacent to the illustrated coverage areas **204.** Furthermore, it should be appreciated that the coverage areas **204** can vary in size and shape based upon hardware associated with the base stations **202,** power output of the mobile station **106,** geographic topography and/or natural or manmade structures within the coverage areas **204,** other factors, and the like.

From the scenario illustrated in FIGURE **2****,** it can be appreciated that the mobile station **106** traveling along the path **106** may operate within the wireless networking environment **100.** At any particular time, one of the three base stations **204** may handle calls, data communications, and/or other traffic associated with the mobile station **106.** For purposes of simplifying the description of the concepts and technologies disclosed herein, the communications will be referred to as a "call." It should be understood that this embodiment is illustrative, and should not be construed as being limiting in any way. As described above, the call may first be serviced by the base station **204A.** As the mobile station **106** travels along the path **206,** the call may be passed, or handed off, to one or more of the base station **204B** and the base station **204C.**

According to various implementations of the concepts and technologies disclosure herein, the central controller **108** is configured to test one or more of the base stations **202** to determine if the base stations **202** are essential or non-essential to providing service to the mobile station **106** and/or other devices within the coverage areas **204.** With respect to the illustrated scenario, the central controller **108** is configured to test the base stations **202** to determine if each of the base stations **202** is essential or non-essential to servicing the call associated with the mobile station **106** during a particular time, for example, as the mobile station **106** travels along the path **206.**

In some embodiments, the central controller **108** commands one or more of the base stations **202** to transition to a softbar state as described herein. As explained above, network resources such as the network resources **102** and/or the base stations **202,** while in the softbar state, may be barred from use unless the network resources **102** and/or the base stations **202** are needed as a last resort. For example, as the mobile station **106** travels along the path **206,** the base station **202A** servicing a call between the first point **208** and the fourth point **214,** may attempt handover of the call to the base station **202B** at the fourth point **214.** If the base station **202B** is in a softbar state, however, the base station **202B** may refuse the handoff from the base station **202A.** As such, the base station **202A** may instead attempt to handover the call to the base station **202C.**

If the handover to the base station **202C** satisfies call servicing requirements for the call, and therefore is successful, then the central controller **108** can determine that the base station **202B** can remain in the softbar state. Similarly, the central controller **108** can identify the base station **202B** as a candidate for being treated, tagged, or labeled as being non-essential, as the call was successfully handed over from the base station **202A** to the base station **202C** without use of the base station **202B.** It should be understood that this embodiment is illustrative, and should not be construed as being limiting in any way.

According to some embodiments of the concepts and technologies disclosed herein, the base stations **202** and/or other network resources **102** that are identified as being non-essential can be configured to run in a low-power or off state. Network resources **102** and/or the base stations **202** running in a low-power or off state may conserve less power, bandwidth, network, maintenance, and/or other resources relative to network resources **102** and/or base stations **202** running in a standard or default on state. In particular, network resources **102** and/or base stations **202** operating in a low-power or off state can reduce power consumption of the wireless networking environment **100.** Thus, some embodiments of the concepts and technologies disclosed herein provide methods and systems for providing power management of network resources such as the network resources **102** and/or the base stations **202.**

In the above-illustrated scenario of FIGURE **2****,** however, if the base station **202C** cannot accept handover of the call from the base station **202A** at the fourth point **214,** then the base station **202B** may be required to accept handover of the call to prevent dropping of the call or other premature and/or unintended termination of the call. In such a scenario, the base station **202B** may be considered essential for servicing calls. As such, the central controller **108** can determine that the base station **202B** may not be a good candidate to switch to a low-power or off state. It therefore can be appreciated that in addition to providing systems and methods for providing power management of network resources, the concepts and technologies disclosed herein also can provide intelligent network resource utilization, and can help avoid deactivating, putting into a low-power state, and/or powering down network resources that are essential, as defined herein, to proper network operation.

The softbar state referred to herein should not be confused with a barred state. In a barred state, network resources such as the network resources **102** and/or the base stations **202** may be prohibited from participating in any communications, even in cases in which a last resort condition exists. A network resource such as the network resource **102** and/or the base stations **202** placed into the softbar state, however, will be prohibited from participating in any communications unless a last resort condition arises, as explained above. In the case of a voice call, for example, a handover from the base station **202A** to the base station **202B** may fail if the second base station **202B** is operating in a barred state, while the same or a similar handover may succeed if the base station **202B** instead is operating in a softbar state. It should be understood that this embodiment is illustrative, and should not be construed as being limiting in any way.

Furthermore, according to various embodiments of the concepts and technologies disclosed herein, softbar testing can be conducted on network resources **102** in an idle mode and/or a connection mode. In particular, a wireless cell or other resource **102** may be placed into an idle mode for softbar testing. As such, the wireless cell may be given a low priority for use, wherein the wireless cell services calls or other communications for devices such as the mobile station **106** that are unable to get coverage from other wireless cells.

The wireless cell may also be placed into a connection mode for softbar testing. In the connection mode, handovers to the wireless cell being tested are disabled when the handover is attempted by another wireless cell that is capable of providing acceptable service. Thus, in the connection mode only last resort handovers are accepted by the tested wireless cell. As mentioned above, a last resort condition may be defined as a situation where a low service level or a poor service quality is being provided by other wireless cells and handover is indicated as being necessary to preventing termination of the communication or unacceptable degradation of call quality or one or more other QoS measures.

According to various implementations, the central controller **108,** the management station **114,** and/or other devices and/or systems can use topology information of the wireless cell under softbar test along with wireless cells neighboring the tested wireless cell to analyze the wireless networking environment **100.** The topology information and/or other information can be used to generate parameterization for placing the test wireless cell into the softbar state. Topology information may include the nature of interfaces and interactions between a wireless cell and other wireless cells within the network, as well as other information. Furthermore, a wireless cell, or other network resource **102,** may be put into a softbar state for a period of time for the testing. As mentioned above, the period of time can include a number of seconds, minutes, hours, days, weeks, and the like. If the network resource **102** being tested is not used during the defined time period, the network resource **102** may be decommissioned. According to other embodiments, a wireless cell, or other network resource **102** may be placed into a softbar state for a period of time such as a night. If the network resource **102** is not used during the defined period of time, the network resource **102** may be switched to a low-power or off state for energy management during the next time period similar or identical to the test period such as the next night. It should be understood that this embodiment is illustrative, and should not be construed as being limiting in any way.

In addition to placing one or more specific wireless cells into a softbar operation state, other granularities or types of network resources **102** may be identified for softbar testing. For example, as explained above, base stations **202** may be put into the softbar state. Similarly, various levels within a hierarchy of network resources **102** can be simultaneously tested. For example, a wireless cell may remain operational while frequency bands or specific services may be switched into a softbar state to test if the frequency bands or specific services are essential or non-essential.

The concepts and technologies presented herein may be used to simplify and improve radio frequency propagation estimation techniques for wireless network analysis. The radio frequency propagation estimation techniques may be used with network planning tools to estimate the propagation of communication signals within the wireless networking environment **100.** Radio frequency propagation estimates may provide an indication of an expected impact for removing from operation a network resource such as the network resources **102** and/or the base stations **202,** from use in the wireless networking environment **100.**

The radio frequency propagation estimates can involve complex calculations on large amounts of information. For example, the radio frequency propagation estimates can involve information defining various physical and operational characteristics for various network resources such as the network resources **102** and/or the base stations **202.** The information can include, for example, latitude, longitude, azimuth, antenna type, propagation models, calibration corrections, terrain maps, traffic maps, power requirements, power output, output frequencies, ambient temperature information, failure rates, other information, combinations thereof, and the like.

Generally, information used in calculating radio frequency propagation estimates must be extremely accurate to obtain precise and usable results. Imprecise and/or erroneous information may result in radio frequency propagation estimates that incorrectly suggest that a network resource such as the network resources **102** and/or the base stations **202** may be removed from service, switched to a low-power or off state, and/or otherwise removed or restricted from normal usage. If a network resource such as the network resources **102** and/or the base stations **202** is removed from service due to imprecise or erroneous information, adverse and/or unexpected results may be experienced within the wireless networking environment **100,** as mentioned above.

Using the concepts and technologies presented herein, the identification of non-essential network resources **102** may be performed with reduced complexity and/or reduced reliance upon the information sometimes used in generating radio frequency propagation estimates. Thus, identification of non-essential network resources **102** can be simplified by using the concepts and technologies disclosed herein. Additionally and/or alternatively, the risks associated with imprecise and/or erroneous information, as well as calculations based thereon, can be reduced by employing various embodiments of the concepts and technologies disclosed herein.

Furthermore, results of an analysis for identifying essential and/or non-essential network resources **102** as disclosed herein may be verified in operation before actions based upon the analysis are implemented. In some embodiments, the results are verified in operation by placing network resources such as the network resources **102** and/or the base stations **202** expected to be non-essential network resources **102** into the softbar state. If the classification of the network resource **102** as non-essential is erroneous, the network resource **102** may, during operation in the softbar state, be transitioned out of the softbar state, and continue to function as a part of the wireless networking environment **100.** If the network resource **102** remains in the softbar state for a specified duration, for example a test period, the central controller **108** may verify the non-essential status of the tested network resource **102,** and take various actions in response to this verification.

It should be appreciated that while the classification of a network resource **102** as being essential or non-essential is discussed herein as being a binary outcome, the concepts and technologies disclosed herein are not so limited. In particular, in some embodiments, results from testing a network resource **102** using the softbar state analysis disclosed herein can produce a classification of the network resource **102** as being less than completely essential and/or less than completely non-essential. For example, the concepts and technologies discussed herein may be used to determine a percentage, probability, likelihood score, or some other scale of outcome for classifying a network resource **102** as essential or non-essential. A percentage, probability, or scaled score may indicate how likely a network resource **102** is to remain essential or non-essential, or to become essential or non-essential based upon traffic levels, failure rates, geographic topology, network topology, time of day, and/or other operating characteristics of the wireless networking environment **100** or the location associated with the network resource **102.**

The concepts and technologies disclosed herein can be used in conjunction with various wireless communication network technologies in various combinations. For example, the concepts and technologies disclosed herein may be applied to mobile communication wireless cells, wireless network operating zones, various granularities of operation within those or other resources, combinations thereof, and the like. Furthermore, a service or frequency band may be specified as the network resource **102** to test and/or to identify as being essential or non-essential. Thus, the service or frequency band may be operated in the softbar state and monitored to determine if the service or frequency is essential or non-essential.

Furthermore, the concepts and technologies disclosed herein may be applied to various mobile technologies operating in accordance with various standards and/or protocols including, but not limited to, second generation (2G) Global System for Mobile communications (GSM), General Packet Radio Service (GPRS) and/or Enhanced Data rates for GSM Evolution (EDGE) standards, third generation (3G) technologies, 3G Universal Mobile Telecommunications System (UMTS), High-Speed Packet Access (HSPA), *e.g.,* the High-Speed Downlink Packet Access (HSDPA), Enhanced Uplink (EUL)/High-Speed Uplink Packet Access (HSUPA), and/or the Evolved HSPA (HSPA+), fourth generation (4G) and pre-4G technologies such as, for example, Long Term Evolution (LTE) technologies, Worldwide Interoperability for Microwave Access (WiMAX) technologies, and the like. The concepts and technologies disclosed herein also can be employed in networks using Code Division Multiple Access (CDMA) technologies, wideband CDMA (WCDMA) technologies, time division multiple access (TDMA) technologies, any other wireless communication network standards, protocols, or technology, combinations thereof, and the like. While the wireless networking environment **100** is described as including a cellular communications network, it should be understood that the concepts and technologies disclosed herein can also be used in non-cellular wireless networks such as WIFI networks, BLUETOOTH communications, and the like.

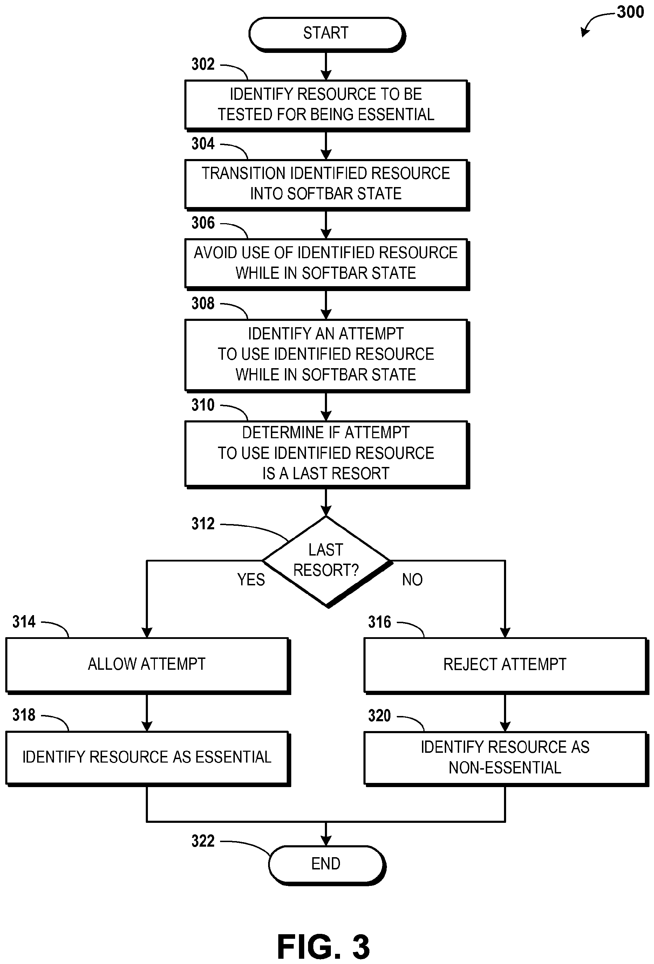

Turning now to FIGURE **3****,** aspects of a method **300** for determining essential resources in a wireless network will be described in detail, according to some embodiments presented herein. It should be understood that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, and/or performed simultaneously, without departing from the scope of the appended claims.

It also should be understood that the methods disclosed herein can be ended at any time and need not be performed in its entirety. Some or all operations of the methods, and/or substantially equivalent operations, can be performed by execution of computer-readable instructions included on a computer-storage media, as defined above. The term "computer-readable instructions," and variants thereof, as used in the description and claims, is used expansively hereinto include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent upon the performance and/or other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For purposes of illustrating and describing the concepts and technologies disclosed herein, the methods are described as being performed by the central controller **108.** It should be understood that the central controller **108,** as well as additional and/or alternative devices and/or network nodes, can provide the functionality described herein via execution of one or more application programs. Furthermore, it should be understood that the functionality of the central controller **108** can be provided by any number of devices or network nodes, and is not limited to the central controller **108** illustrated in the FIGURES. Thus, the illustrated embodiment is illustrative, and should not be viewed as being limiting in any way.

The method **300** begins with operation **302** where a network resource **102** may be identified to undergo testing to determine if the network resource **102** is an essential network resource **102** or a non-essential network resource **102.** The network resource **102** identified for testing may be identified explicitly by an operator or other authorized entity, or the network resource **102** may be selected through a simulation or test plan. For example, the network resource **102** can be identified as a likely candidate for power reduction, and the test can be conducted to determine if the network resource **102** is essential or non-essential, thereby determining if the network resource **102** can be switched to a low-power or off state. A network resource **102** can be tested as being essential or non-essential, and if the network resource **102** is identified as being non-essential, the network resource **102** may be powered down for time periods during which the network resource **102** is non-essential, as defined herein. Powering down a network resource **102** can provide various benefits such as reduced energy consumption associated with the network resource **102** and/or the wireless networking environment **100,** improved life expectancy of the network resource **102,** reduced network operating or maintenance costs and complexity, combinations thereof, and the like.

From operation **302,** the method **300** proceeds to operation **304.** At operation **304,** the network resource **102** identified in operation **302** may be transitioned into a softbar state. From operation **304,** the method **300** proceeds to operation **306.** At operation **306,** use of the network resource **102** identified in operation **302** may be avoided. For example, if the network resource **102** identified in operation **302** corresponds to a base station **202,** a handover to the base station **202** can be avoided unless the handover corresponds to a last resort condition as defined herein. Thus, as illustrated in FIGURE **3****,** use of the identified network resource **102** may be avoided while the network resource **102** is in the softbar state.

From operation **306,** the method **300** proceeds to operation **308.** At operation **308,** an attempt to use the identified network resource **102** while the network resource **102** is operating in a softbar state can be identified. The attempt to use the network resource **102** may be identified explicitly from a request to access a certain service or network resource **102.** Additionally, or alternatively, the attempt to use the network resource **102** may be recognized via a handover offering from a wireless cell or other communications network resource that neighbors or communicates with the network resource **102** being tested.

From operation **308,** the method **300** proceeds to operation **310.** At operation **310,** it may be determined if the attempt recognized in operation **308** corresponds to an attempt to use the identified network resource **102** as a last resort. If the call or data access associated with the attempt recognized in operation **308** may fail without use of the network resource **102,** then the attempt may be considered to be a last resort attempt.

From operation **310,** the method **300** proceeds to operation **312.** At operation **312,** the method **300** may continue to operation **314** if it was determined at operation **310** that the attempt recognized in operation **308** corresponds to an attempt to access the identified network resource **102** as a last resort. Alternatively, from operation **312,** the method **300** may continue to operation **316** if it was determined at operation **310** that the attempt recognized in operation **308** did not correspond to an attempt to access the identified network resource **102** as a last resort.

At operation **314** the attempt recognized in operation **308** may be allowed because the attempt to access the network resource **102** corresponds to an attempt as a last resort. From operation **314,** the method **300** proceeds to operation **318.** At operation **318,** the network resource **102** can be identified as an essential network resource **102,** because use of the network resource **102** was determined to be required as a last resort.

At operation **316,** the attempt recognized in operation **308** may be rejected because the attempt to access the network resource **102** does not correspond to an attempt as a last resort. From operation **316,** the method **300** proceeds to operation **320.** At operation **320,** the network resource **102** may remain in a softbar state. The network resource **102** may also be identified as a non-essential network resource **102** since the network resource **102** was not accessed as a last resort.

From operations **318** and **320,** the method **300** proceeds to operation **322.** The method **300** terminates at operation **322.** Although not depicted in FIGURE **3****,** the method **300** may also be repeated periodically or continuously.

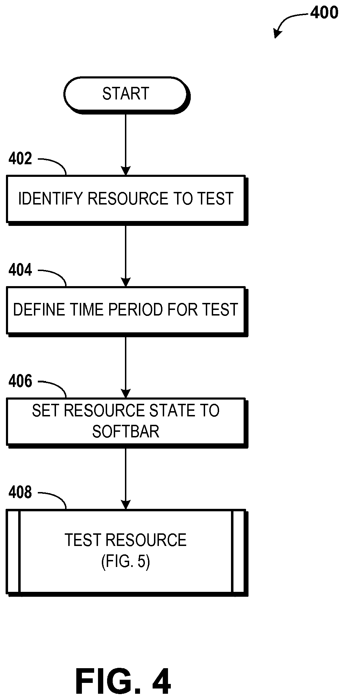

Turning now to FIGURE **4****,** a method **400** for determining essential resources in a wireless network is illustrated, according to some embodiments disclosed herein. The method **400** begins at operation **402,** wherein the central controller **108** identifies a network resource **102** to test. More particularly, the central controller **108** identifies a network resource **102** to test in a softbar operation state to determine if the network resource **102** is an essential network resource or a non-essential network resource. The network resource **102** can be selected according to various considerations, as discussed above with reference to operation **302** of FIGURE **3****.** Thus, for example, a network operator or other authorized entity, a software program, and/or other users, software, systems, and/or devices can select the network resource **102** for testing based upon time schedules, rotating test schedules, network performance data, other considerations, and the like. Furthermore, the network resource **102** can be selected randomly for testing, and/or the network resource **102** can be manually specified for testing, if desired.

From operation **402,** the method **400** proceeds to operation **404,** wherein the central controller **108** specifies a time period for the test. As explained herein, the test can include switching the network resource **102** into a softbar state for a period of time, and determining if the network resource **102** is needed during that period of time as a network resource **102** of last resort. Thus, the operation **402** includes defining the length or duration of the test. According to various implementations, the time period ranges from one or more portions of a second to one or more seconds, minutes, hours, days, and/or weeks. Thus, it should be understood that the time period can be set to almost any time period, depending upon various considerations such as network traffic, special events in the geographic vicinity of the network resources **102,** operational information associated with neighboring network resources **102,** historical network usage information, road construction or obstructions, other considerations, combinations thereof, and the like.

From operation **404,** the method **400** proceeds to operation **406,** wherein the central controller **108** sets an operating state of the network resource **102** to the softbar state. As explained above, the central controller **108** can issue one or more commands **112** and transmit the commands **112** to the network resources **102.** The network resources **102** are configured to switch to the softbar state in response to receiving the commands **112.** Upon receiving the commands **112,** the network resources **102** can switch to the softbar state and/or schedule a switch to the softbar state for testing at another time.

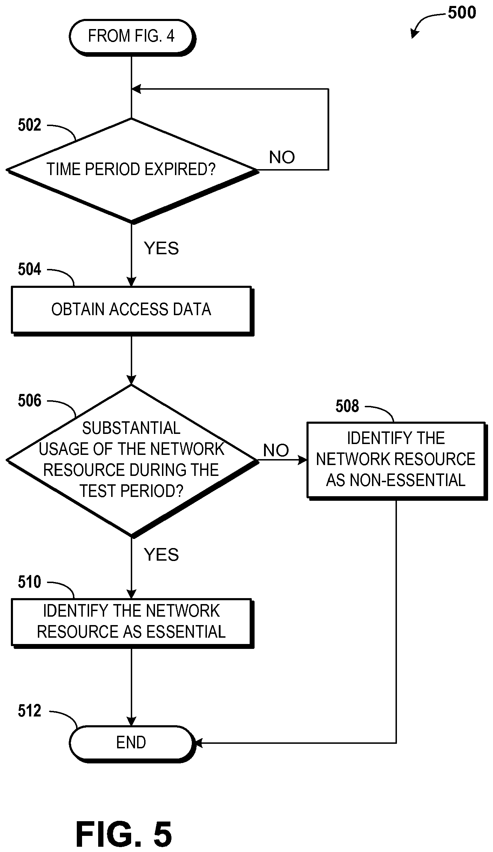

From operation **406,** the method **400** proceeds to operation **408,** wherein the network resource **102** is tested. The test process can include the functionality discussed above with reference to FIGURES **1-3** and/or the functionality discussed below with reference to FIGURE **5****.** In the illustrated embodiment, the method **400** ends at operation **408,** and a test process such as the process illustrated in FIGURE **5** is executed.

Turning now to FIGURE **5****,** a method **500** for determining essential resources in a wireless network is described in detail, according to some embodiments presented herein. The method **500** begins at operation **502,** which can be reached via execution of the operations discussed above with reference to FIGURE **4****.** In operation **502,** the central controller **108** determines if the time period determined in operation **404** has expired. If the central controller **108** determines in operation **502** that the time period has not expired, the method **500** can pause at or return to operation **502,** and the central controller **108** can again determine if the time period has expired.. If the central controller **108** determines in operation **502** that the time period has expired, the method **500** proceeds to operation **504.**

In operation **504,** the central controller **108** obtains access data **112** and/or other network usage data that describes traffic and/or resource usage during the time period. As explained herein, the access data **112** can be obtained from one or more monitoring and/or reporting systems or platforms including, but not limited to, a monitoring server, the network resources **102,** and/or other systems, devices, and/or nodes.

From operation **504,** the method **500** proceeds to operation **506,** wherein the central controller **108** analyzes the access data **112** and/or other network usage information to determine if any substantial usage of the network resource **102** occurred during the time period, also referred to herein as the test period. If the central controller **108** determines, in operation **506,** that substantial usage of the network resource **102** did not occur during the time period, , the method **500** proceeds to operation **508.** It should be understood from the description herein, that in some embodiments, any usage of the network resource **102** is considered substantial. Thus, the illustrated embodiment should be understood as being illustrative, and should not be construed as being limiting in any way.

At operation **508,** the central controller **108** can identify the tested network resource **102** as a non-essential network resource **102.** According to various implementations, network resources **102** identified as being non-essential may be treated, tagged, or labeled as being non-essential, and other actions can be taken with respect to the resources **102** as explained herein. If the central controller **108** determines, in operation **506,** that substantial usage of the network resource **102** did not occur during the time period, the method **500** proceeds to operation **510.** As noted above, the central controller **108** can determine that any usage of the network resource **102** is or is not substantial based upon various considerations, preferences, operating conditions, combinations thereof, and the like.

At operation **510,** the central controller **108** tags or labels the network resource **102** as an essential network resource. Thus, the network resource **102** tested may be determined not to be a suitable candidate for operation in a low-power or off state, since the network resource **102** was used and/or used in a substantial manner, during the time period. Substantial usage of the network resource **102** during the time period can be understood by the central controller **108** as indicating that the network resource **102** was forced to exit the softbar operation state during the time period of the test to service an access request in a last resort condition. As should be appreciated in light of the description herein, the central controller **108** can determine the network resource **102** is essential or non-essential based upon the access data **112** or other monitoring information or data received by the central controller **108.** The network resource **102** also can label itself as being essential or non-essential, via execution of one or more application programs executing on the network resource **102.**

From operation **510,** or from operation **506,** the method **500** proceeds to operation **512.** The method **500** ends at operation **512.** Although not illustrated in FIGURE **5****,** it should be understood that the central controller **108** can return execution to the beginning of FIGURE **4****,** wherein the central controller **108** can identify the same or another resource **102** for testing. Additionally, as disclosed herein, the central controller **108** can take various actions based upon the determination that the network resource **102** is essential or non-essential including, but not limited to, switching or commanding a switch of the network resource **102** to a low-power or off state, indicating that the network resource **102** can or should be decommissioned, indicating that the network resource **102** can or should be relocated or reallocated, and/or other actions.

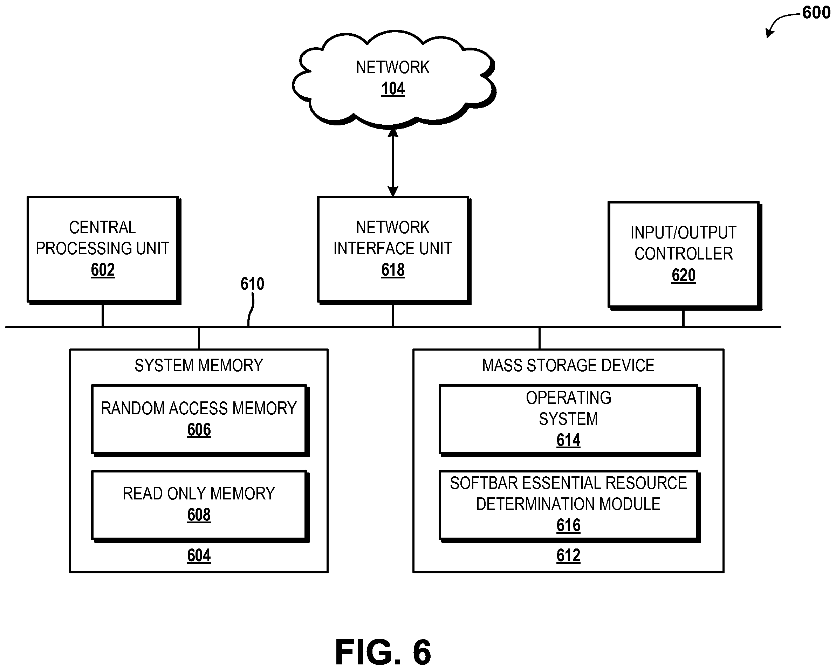

Turning now to FIGURE **6****,** an illustrative computer architecture **600** for a computing device capable of executing software components described herein for determining essential resources in a wireless network will be described. The computer architecture **600** shown in FIGURE **6** illustrates an embedded control computer, a desktop computer, a laptop computer, a server computer, a cellular telephone, a smart phone, a PDA, combinations thereof, and the like, and can be configured to execute aspects of the software components presented herein. For example, a device having an architecture similar to the computer architecture **600** of FIGURE **6** may serve as the central controller **108,** the management station **110,** the mobile station **106,** and/or a controller, base station controller, or other device associated with one or more of the base stations **202.** It should be appreciated that the described software components can also be executed on other example computing environments, such as game consoles, television displays, STBs, kiosks, vehicular information systems, embedded computer systems, combinations thereof, and the like.

The computer architecture **600** includes a central processing unit **602** (CPU), a system memory **604,** which includes a random access memory (RAM) **606** and a read-only memory (ROM) **608,** and a system bus **610** that can couple the system memory **604** to the CPU **602.** A basic input/output system containing the basic routines that help to transfer information between elements within the computer architecture **600,** such as during startup, can be stored in the ROM **608.** The computer architecture **600** may further include a mass storage device **612.** The mass storage device **612** can store an operating system **614,** as well as software, data, and various program modules. In the illustrated embodiment, the mass storage device **612** stores a softbar essential network resource determination module **616.** Execution of the softbar essential network resource determination module **616** by the CPU **602** can cause a computing system embodying the computer architecture **600** to provide functionality such as that described above with reference to FIGURES **1-5****.**

The mass storage device **612** can be connected to the CPU **602** through a mass storage controller (not illustrated) connected to the bus **610.** The mass storage device **612** and its associated computer-readable media can provide non-volatile storage for the computer architecture **600.** Although the description of computer-readable media contained herein refers to a mass storage device, such as a hard disk or CD-ROM drive, it should be appreciated by those skilled in the art that computer-readable media can be any available computer storage media or communication media that can be accessed by the computer architecture **600.**

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture **600.** For purposes the claims, the phrase "computer storage medium" and variations thereof, does not include waves, signals, and/or other transitory and/or intangible communication media, per se.

According to various embodiments, a computing system embodying the computer architecture **600** may operate in a networked environment using logical connections to remote computers through a network such as the network **104.** The computing system embodying the computer architecture **600** may connect to the network **104** through a network interface unit **618** connected to the bus **610.** It should be appreciated that the network interface unit **618** may also be utilized to connect to other types of networks and remote computer systems. The computing system embodying the computer architecture **600** may also include an input/output controller **620** for receiving and processing input from a number of other devices, including a keyboard, mouse, or electronic stylus (not illustrated). Similarly, the input/output controller **620** may provide output to a video display, a printer, or other type of output device (also not illustrated).

As mentioned briefly above, a number of program modules and data files may be stored in the mass storage device **612** and RAM **606** of a computing system embodying the computer architecture **600.** The program modules and data files include, but are not limited to, an operating system **614** suitable for controlling the operation of a desktop computer, laptop computer, server computer, mobile telephone, and/or other computing device or environment. The mass storage device **612,** ROM **608,** and RAM **606** may also store one or more program modules. In particular, the mass storage device **612,** the ROM **608,** and the RAM **606** may store the softbar essential network resource determination module **616** for execution by the CPU **602.** The softbar essential network resource determination module **616** can include software components for implementing some, all, or none of the processes discussed in detail above with reference to FIGURES **1-5****.** The mass storage device **612,** the ROM **608,** and the RAM **606** may also store other types of program modules.

Software modules, such as the softbar essential network resource determination module **616** may be associated with the system memory **604,** the mass storage device **612,** or otherwise. The software modules may include software instructions that, when loaded into the CPU **602** and executed, transform a general-purpose computing system into a special-purpose computing system customized to facilitate all, or part of, the techniques for determining essential resources in a wireless network as disclosed herein. As detailed throughout this description, the program modules may provide various tools or techniques by which the a computing system embodying the computer architecture **600** may participate within the overall systems or operating environments using the components, logic flows, and/or data structures discussed herein.

The CPU **602** may be constructed from any number of transistors or other circuit elements, which may individually or collectively assume any number of states. More specifically, the CPU **602** may operate as a state machine or finite-state machine. Such a machine may be transformed to a second machine, or specific machine by loading executable instructions contained within the program modules. These computer-executable instructions may transform the CPU **602** by specifying how the CPU **602** transitions between states, thereby transforming the transistors or other circuit elements constituting the CPU **602** from a first machine to a second machine, wherein the second machine may be specifically configured to support real time event driven energy management. The states of either machine may also be transformed by receiving input from one or more user input devices associated with the input/output controller **620,** the network interface unit **618,** other peripherals, other interfaces, or one or more users or other actors. Either machine may also transform states, or various physical characteristics of various output devices such as printers, speakers, video displays, or otherwise.

Encoding of the program modules may also transform the physical structure of the storage media. The specific transformation of physical structure may depend on various factors, in different implementations of this description. Examples of such factors may include, but are not limited to: the technology used to implement the storage media, whether the storage media are characterized as primary or secondary storage, and the like. For example, if the storage media are implemented as semiconductor-based memory, the program modules may transform the physical state of the system memory **604** when the software is encoded therein. For example, the software may transform the state of transistors, capacitors, or other discrete circuit elements constituting the system memory **604.**

As another example, the storage media may be implemented using magnetic or optical technology. In such implementations, the program modules may transform the physical state of magnetic or optical media, when the software is encoded therein. These transformations may include altering the magnetic characteristics of particular locations within given magnetic media. These transformations may also include altering the physical features or characteristics of particular locations within given optical media, to change the optical characteristics of those locations. It should be appreciated that various other transformations of physical media are possible without departing from the scope of the present description.

Based on the foregoing, it should be appreciated that technologies for determining essential resources in a wireless network are presented herein.

The subject matter described above is provided by way of illustration only. Various modifications and changes may be made to the subject matter described herein without following the example embodiments and applications illustrated and described.

## Claims

1. A computer-implemented method for identifying if a network resource (102) in a wireless networking environment (100) is needed, the method comprising computer-implemented operations for:
identifying (402), at a central controller (108), a network resource (102) to be tested;
defining (404) a time period during which the network resource (102) is to be tested;
generating a command (110) for transitioning the network resource (102) to a softbar operation state in which use of the network resource (102) is avoided;
determining if the time period has expired; and
in response to determining that the time period has expired,
obtaining access data (112) describing activity associated with the network resource (102) during the time period, and
identifying the network resource (102) as needed network resource (102) in response to determining that the access data (112) indicates usage of the network resource (102) during the time period,
wherein the softbar operation state comprises a state in which use of the network resource (102) is allowed (314) when a failure to use the network resource is expected to result in a reduction in quality of service of communications, or a premature or unintended termination of a voice or data communication, or an injury or death in a case of an emergency, or a failure to provide services or communications.

2. The method of claim 1, further comprising generating a command (110) for transitioning the network resource (102) out of a softbar operation state in response to determining that the time period has expired, and
in response to determining that the time period has not expired maintaining the network resource (102) in the softbar operation state.

3. The method of claim 1, further comprising identifying the network resource (102) as a not needed network resource (102) in response to determining that the access data (112) does not indicate usage of the network resource (102) during the time period.

4. The method of claim 1, wherein the network resource (102) comprises a base station (202) of the wireless networking environment (100), and determining if the access data (112) does not indicate usage of the network resource (102) during the time period comprises determining that the time period has expired without an attempted handover of a communication to the base station (202).

5. The method of claim 1, further comprising receiving access data (112) comprising data indicating activity associated with the network resource (102) during the time period.

6. A central controller (108) configured to identify if a network resource (102) is needed, the central controller (108) comprising a central processing unit (602) in communication with a mass storage device (612), wherein execution of computer-executable instructions stored in the mass storage device (612) cause the central processing unit (602) to:
identify (402) a network resource (102) to be tested;
define (404) a time period during which the network resource (102) is to be tested;
generate a command (112) for transitioning the network resource (102) to a softbar operation state in which use of the network resource (102) is avoided;
determine if the time period has expired; and
in response to determining that the time period has expired,
obtaining access data (112) describing activity associated with the network resource (102) during the time period, and
identify the network resource (102) as needed network resource (102) in response to determining that the access data (112) indicates usage of the network resource (102) during the time period,
wherein the softbar operation state comprises a state in which use of the network resource (102) is allowed (314) when a failure to use the network resource is expected to result in a reduction in quality of service of communications, or a premature or unintended termination of a voice or data communication, or an injury or death in a case of an emergency, or a failure to provide services or communications.

7. The central controller (108) of claim 6, wherein execution of the computer-executable instructions stored in the mass storage device (612) further cause the central processing unit (602) to generate a command (110) for transitioning the network resource (102) out of a softbar operation state, in response to determining that the time period has expired.

8. The central controller (108) of claim 6, wherein execution of the computer-executable instructions stored in the mass storage device (612) cause the central processing unit (602) to identify the network resource (102) from a plurality of network resources (102), and the plurality of network resources (102) provide services to a geographic area, and
wherein the plurality of network resources (102) comprises a plurality of base stations (202), each of the plurality of base stations (202) having a respective coverage area (204), and at least two of the coverage areas (204) of the base stations (202) overlap, at least partially.

9. The central controller (108) of claim 8, wherein the usage of the network resource (102) comprises a handover of a call from one of the plurality of base stations (202) to a second of the plurality of base stations (202), the call being associated with a mobile station (106) located within at least one of the plurality of coverage areas (204).

10. The central controller (108) of claim 8, wherein the usage of the network resource (102) comprises access of the base station (202) when a failure to use the network resource during the time period is expected to result in a reduction in quality of service of communications, or a premature or unintended termination of a voice or data communication, or an injury or death in a case of an emergency, or a failure to provide services or communications.

11. The central controller (108) of claim 8 configured to identify a base station (202) as the needed network resource.

## Patentansprüche

1. Computerimplementiertes Verfahren zum Identifizieren, ob eine Netzwerkressource (102) in einer drahtlosen Netzwerkumgebung (100) benötigt wird, wobei das Verfahren computerimplementierte Operationen umfasst zum:
Identifizieren (402) einer zu testenden Netzwerkressource (102) an einer zentralen Steuerung (108) ;
Definieren (404) einer Zeitspanne, während der die Netzwerkressource (102) getestet werden soll;
Erzeugen eines Befehls (110) zum Versetzen der Netzwerkressource (102) in einen Softbar-Betriebszustand, in welchem Verwendung der Netzwerkressource (102) vermieden wird;
Bestimmen, ob die Zeitspanne abgelaufen ist; und
in Reaktion auf ein Bestimmen, dass die Zeitspanne abgelaufen ist,
Abrufen von Zugriffsdaten (112), die eine mit der Netzwerkressource (102) assoziierte Aktivität während der Zeitspanne beschreiben, und
Identifizieren der Netzwerkressource (102) als benötigte Netzwerkressource (102) in Reaktion auf ein Bestimmen, dass die Zugriffsdaten (112) Nutzung der Netzwerkressource (102) während der Zeitspanne angeben,
wobei der Softbar-Betriebszustand einen Zustand umfasst, in welchem Verwendung der Netzwerkressource (102) zugelassen wird (314), wenn zu erwarten ist, dass ein Nichtverwenden der Netzwerkressource zu einer Verringerung der Dienstqualität von Kommunikationen oder einer vorzeitigen oder unbeabsichtigten Beendigung einer Sprach- oder Datenkommunikation oder einer Verletzung oder Tod im Falle eines Notfalls oder einem Nichtbereitstellen von Diensten oder Kommunikationen führt.

2. Verfahren nach Anspruch 1, ferner umfassend ein Erzeugen eines Befehls (110) zum Versetzen der Netzwerkressource (102) in Reaktion auf ein Bestimmen, dass die Zeitspanne abgelaufen ist, aus einem Softbar-Betriebszustand heraus, und
Halten der Netzwerkressource (102) im Softbar-Betriebszustand in Reaktion auf ein Bestimmen, dass die Zeitspanne nicht abgelaufen ist.

3. Verfahren nach Anspruchb1, ferner umfassend ein Identifizieren der Netzwerkressource (102) als eine nicht benötigte Netzwerkressource (102) in Reaktion auf ein Bestimmen, dass die Zugriffsdaten (112) keine Nutzung der Netzwerkressource (102) während der Zeitspanne angeben.

4. Verfahren nach Anspruch 1, wobei die Netzwerkressource (102) eine Basisstation (202) der drahtlosen Netzwerkumgebung (100) umfasst, und das Bestimmen, ob die Zugriffsdaten (112) keine Nutzung der Netzwerkressource (102) während der Zeitspanne angeben, ein Bestimmen umfasst, dass die Zeitspanne ohne ein versuchtes Handover einer Kommunikation zu der Basisstation (202) abgelaufen ist.

5. Verfahren nach Anspruch 1, ferner umfassend ein Empfangen von Zugriffsdaten (112), welche Daten umfassen, die eine mit der Netzwerkressource (102) assoziierte Aktivität während der Zeitspanne angeben.

6. Zentrale Steuerung (108), die so konfiguriert ist, dass sie identifiziert, ob eine Netzwerkressource (102) benötigt wird, wobei die zentrale Steuerung (108) eine zentrale Verarbeitungseinheit (602) in Kommunikation mit einem Massenspeichergerät (612) umfasst, wobei eine Ausführung von computerausführbaren Anweisungen, die auf dem Massenspeichergerät (612) gespeichert sind, die zentrale Verarbeitungseinheit (602) veranlassen zum:
Identifizieren (402) einer zu testenden Netzwerkressource (102);
Definieren (404) einer Zeitspanne, während der die Netzwerkressource (102) getestet werden soll;
Erzeugen eines Befehls (112) zum Versetzen der Netzwerkressource (102) in einen Softbar-Betriebszustand, in welchem Verwendung der Netzwerkressource (102) vermieden wird;
Bestimmen, ob die Zeitspanne abgelaufen ist; und
in Reaktion auf ein Bestimmen, dass die Zeitspanne abgelaufen ist,
Abrufen von Zugriffsdaten (112), die eine mit der Netzwerkressource (102) assoziierte Aktivität während der Zeitspanne beschreiben, und
Identifizieren der Netzwerkressource (102) als benötigte Netzwerkressource (102) in Reaktion auf ein Bestimmen, dass die Zugriffsdaten (112) Nutzung der Netzwerkressource (102) während der Zeitspanne angeben,
wobei der Softbar-Betriebszustand einen Zustand umfasst, in welchem Verwendung der Netzwerkressource (102) zugelassen wird (314), wenn zu erwarten ist, dass ein Nichtverwenden der Netzwerkressource zu einer Verringerung der Dienstqualität von Kommunikationen oder einer vorzeitigen oder unbeabsichtigten Beendigung einer Sprach- oder Datenkommunikation oder einer Verletzung oder Tod im Falle eines Notfalls oder einem Nichtbereitstellen von Diensten oder Kommunikationen führt.

7. Zentrale Steuerung (108) nach Anspruch 6, wobei die Ausführung der computerausführbaren Anweisungen, die auf dem Massenspeichergerät (612) gespeichert sind, die zentrale Verarbeitungseinheit (602) veranlassen, in Reaktion auf ein Bestimmen, dass die Zeitspanne abgelaufen ist, einen Befehl (110) zum Herausversetzen der Netzwerkressource (102) aus dem Softbar-Betriebszustand zu erzeugen.

8. Zentrale Steuerung (108) nach Anspruch 6, wobei die Ausführung der computerausführbaren Anweisungen, die auf dem Massenspeichergerät (612) gespeichert sind, die zentrale Verarbeitungseinheit (602) veranlassen, die Netzwerkressource (102) aus einer Mehrzahl von Netzwerkressourcen (102) zu identifizieren, und die Mehrzahl von Netzwerkressourcen (102) Dienste für ein geografisches Gebiet bereitstellt, und
wobei die Mehrzahl von Netzwerkressourcen (102) eine Mehrzahl von Basisstationen (202) umfasst, jede der Mehrzahl von Basisstationen (202) ein jeweiliges Versorgungsgebiet (204) aufweist, und mindestens zwei der Versorgungsgebiete (204) der Basisstationen (202) einander wenigstens teilweise überlappen.

9. Zentrale Steuerung (108) nach Anspruch 8, wobei die Nutzung der Netzwerkressource (102) ein Handover einer Verbindung von einer der Mehrzahl von Basisstationen (202) zu einer zweiten der Mehrzahl von Basisstationen (202) umfasst, wobei die Verbindung mit einer Mobilstation (106) assoziiert ist, die sich innerhalb mindestens eines der Mehrzahl von Versorgungsgebieten (204) befindet.

10. Zentrale Steuerung (108) nach Anspruch 8, wobei die Nutzung der Netzwerkressource (102) Zugriff der Basisstation (202) umfasst, wenn zu erwarten ist, dass ein Nichtverwenden der Netzwerkressource während der Zeitspanne zu einer Verringerung der Dienstqualität von Kommunikationen oder einer vorzeitigen oder unbeabsichtigten Beendigung einer Sprach- oder Datenkommunikation oder einer Verletzung oder Tod im Falle eines Notfalls oder einem Nichtbereitstellen von Diensten oder Kommunikationen führt.

11. Zentrale Steuerung (108) nach Anspruch 8, die so konfiguriert ist, dass sie eine Basisstation (202) als die benötigte Netzwerkressource identifiziert.

## Revendications

1. Procédé mis en oeuvre par ordinateur pour identifier si une ressource de réseau (102) dans un environnement de réseautage sans fil (100) est nécessaire, le procédé comprenant des opérations mises en oeuvre par ordinateur pour :
l'identification (402), à un organe de commande central (108), d'une ressource de réseau (102) à tester ;
la définition (404) d'une période de temps au cours de laquelle la ressource de réseau (102) doit être testée ;
la génération d'une commande (110) pour la transition de la ressource de réseau (102) dans un état d'opération de barre souple dans lequel une utilisation de la ressource de réseau (102) est évitée ;
la détermination si la période de temps a expiré ; et
en réponse à la détermination que la période de temps a expiré,
l'obtention de données d'accès (112) décrivant une activité associée à la ressource de réseau (102) au cours de la période de temps, et
l'identification que la ressource de réseau (102) est une ressource de réseau (102) nécessaire en réponse à la détermination que les données d'accès (112) indiquent une utilisation de la ressource de réseau (102) au cours de la période de temps,
dans lequel l'état d'opération de barre souple comprend un état dans lequel une utilisation de la ressource de réseau (102) est autorisée (314) lorsqu'il est prévu qu'un échec d'utilisation de la ressource de réseau engendre une réduction de qualité de service de communications, ou une terminaison prématurée ou imprévue d'une communication vocale ou de données, ou une blessure ou un décès en cas d'urgence, ou un échec de fourniture de services ou de communications.

2. Procédé selon la revendication 1, comprenant en outre la génération d'une commande (110) pour la transition de la ressource de réseau (102) hors d'un état d'opération de barre souple en réponse à la détermination que la période de temps a expiré, et
en réponse à la détermination que la période de temps n'a pas expiré, le maintien de la ressource de réseau (102) dans l'état d'opération de barre souple.

3. Procédé selon la revendication 1, comprenant en outre l'identification que la ressource de réseau (102) est une ressource de réseau (102) non nécessaire en réponse à la détermination que les données d'accès (112) n'indiquent pas d'utilisation de la ressource de réseau (102) au cours de la période de temps.

4. Procédé selon la revendication 1, dans lequel la ressource de réseau (102) comprend une station de base (202) de l'environnement de réseautage sans fil (100), et la détermination si les données d'accès (112) n'indiquent pas d'utilisation de la ressource de réseau (102) au cours de la période de temps comprend la détermination que la période de temps a expiré sans aucune tentative de transfert intercellulaire d'une communication à la station de base (202).

5. Procédé selon la revendication 1, comprenant en outre la réception de données d'accès (112) comprenant des données indiquant une activité associée à la ressource de réseau (102) au cours de la période de temps.

6. Organe de commande central (108) configuré pour identifier si une ressource de réseau (102) est nécessaire, l'organe de commande central (108) comprenant une unité centrale de traitement (602) en communication avec un dispositif de mémorisation de masse (612), dans lequel l'exécution d'instructions exécutables par ordinateur mémorisées dans le dispositif de mémorisation de masse (612) amène l'unité centrale de traitement (602) à effectuer :
l'identification (402) d'une ressource de réseau (102) à tester ;
la définition (404) d'une période de temps au cours de laquelle la ressource de réseau (102) doit être testée ;
la génération d'une commande (112) pour la transition de la ressource de réseau (102) dans un état d'opération de barre souple dans lequel une utilisation de la ressource de réseau (102) est évitée ;
la détermination si la période de temps a expiré ; et
en réponse à la détermination que la période de temps a expiré,
l'obtention de données d'accès (112) décrivant une activité associée à la ressource de réseau (102) au cours de la période de temps, et
l'identification de la ressource de réseau (102) en tant que ressource de réseau (102) nécessaire en réponse à la détermination que les données d'accès (112) indiquent une utilisation de la ressource de réseau (102) au cours de la période de temps,
dans lequel l'état d'opération de barre souple comprend un état dans lequel une utilisation de la ressource de réseau (102) est autorisée (314) lorsqu'il est prévu qu'un échec d'utilisation de la ressource de réseau engendre une réduction de qualité de service de communications, ou une terminaison prématurée ou imprévue d'une communication vocale ou de données, ou une blessure ou un décès en cas d'urgence, ou un échec de fourniture de services ou de communications.

7. Organe de commande central (108) selon la revendication 6, dans lequel l'exécution des instructions exécutables par ordinateur mémorisées dans le dispositif de mémorisation de masse (612) amène en outre l'unité centrale de traitement (602) à effectuer la génération d'une commande (110) pour la transition de la ressource de réseau (102) hors d'un état d'opération de barre souple en réponse à la détermination que la période de temps a expiré.

8. Organe de commande central (108) selon la revendication 6, dans lequel l'exécution des instructions exécutables par ordinateur mémorisées dans le dispositif de mémorisation de masse (612) amène en outre l'unité centrale de traitement (602) à effectuer l'identification de la ressource de réseau (102) parmi une pluralité de ressources de réseau (102), et la pluralité de ressources de réseau (102) fournissent des services dans une zone géographique, et
dans lequel la pluralité de ressources de réseau (102) comprennent une pluralité de stations de base (202), chacune de la pluralité de stations de base (202) ayant une zone de couverture respective (204), et au moins deux des zones de couverture (204) des stations de base (202) se chevauchent au moins partiellement.

9. Organe de commande central (108) selon la revendication 8, dans lequel l'utilisation de la ressource de réseau (102) comprend un transfert intercellulaire d'un appel de l'une de la pluralité de stations de base (202) à une deuxième de la pluralité de stations de base (202), l'appel étant associé à une station mobile (106) située à l'intérieur d'au moins l'une de la pluralité de zones de couverture (204).

10. Organe de commande central (108) selon la revendication 8, dans lequel l'utilisation de la ressource de réseau (102) comprend l'accès de la station de base (202) lorsqu'il est prévu qu'un échec d'utilisation de la ressource de réseau au cours de la période de temps engendre une réduction de qualité de service de communications, ou une terminaison prématurée ou imprévue d'une communication vocale ou de données, ou une blessure ou un décès en cas d'urgence, ou un échec de fourniture de services ou de communications.

11. Organe de commande central (108) selon la revendication 8, configuré pour identifier qu'une station de base (202) est la ressource de réseau nécessaire.
